# EUROPEAN PATENT SPECIFICATION

(11) **EP 1 178 861 B1**
(45) Date of publication and mention of the grant of the patent: **10.12.2003**
(21) Application number: 00927583.5
(22) Date of filing: 15.05.2000
(51) Int. Cl.: B04C 5/10, B01D 45/12

(54) **SEPARATION AND COLLECTION OF ANALYTE MATERIALS**
TRENNUNG UND SAMMLUNG VON ANALYTENMATERIAL
SEPARATION ET COLLECTE DE MATIERES DE SUBSTANCES A ANALYSER

(30) Priority: 15.05.1999 GB 9911336
(43) Date of publication of application: 13.02.2002
(73) Proprietor: Smiths Detection-Watford Limited, Watford Hertfordshire WD2 2BW (GB)
(72) Inventor: DAY, Peter, John, Hertfordshire AL3 4BA (GB)
(74) Representative: Maggs, Michael Norman
(86) International application number: PCT/GB00/01853
(87) International publication number: WO 00/069568

(56) References cited:
- EP-A- 0 244 523
- EP-A- 0 473 566
- GB-A- 1 177 176
- GB-A- 1 500 117
- GB-A- 2 284 165

## Description

The present invention relates to cyclone separators such as are used to separate and collect, for analysis, gas- or vapour-borne materials, most usually in the form of particles. Such a cyclone separator is known from GB-A-1 177 176.

The principle of operation of such a cyclone separator involves the particle-bearing gas or vapour, typically air, being forced tangentially by means of a pressure differential into a cylindrical chamber. The particles, due to their mass are centrifuged to the wall of the chamber and are collected as they fall to the bottom of the chamber, the exhaust air being ducted away from the chamber through an exhaust port.

In one variant of the cyclone separator, a liquid, typically water, is sprayed into the particle carrying inlet air stream, usually just outside the collection chamber. The water droplets are centrifuged with the particles, and wash the collected particles to the bottom of the chamber from where the resulting solution or suspension can be pumped away for use or analysis. This variant is commonly referred to as a "wetted-wall" cyclone.

The wetted-wall cyclone may also be used for the collection of analyte material present in the incoming air in the form of air-borne vapours.

The known wetted-wall cyclone, operating with an inlet spray has a functional inefficiency in that, as a result of surface tension effects, the water impacting the wall of the cylone forms clumps and streams rather than a uniformly wetted surface, meaning that the wall washing is invariably of a inconsistent nature and the separation achieved is of variable efficiency.

It is thus one object of the present invention to provide an improved construction of wetted-wall cylone separator.

According to one aspect of the invention a wetted wall cyclone separator is provided with means enabling the inner surface of the wall of the separation chamber to be more uniformly wetted than possible with an inlet spray arrangement, thereby providing a more consistent and more efficient collection of materials introduced into the chamber in the incoming gas or vapour stream than hitherto.

In a preferred embodiment of the invention, the separation chamber has a wall comprised at least in part of a porous material through which a liquid may be forced to provide the more uniform wetting of the inner surface of the cylinder required to achieve the improved consistency and efficiency of sample collection.

The porous material may be a sintered material, for example a ceramic, or a metal, such as sintered stainless steel.

From another aspect the invention consists in a method of separation of a gas or vapour borne material by means of a cyclone separator in which the inner wall of the separator is wetted, and material incoming is collected and carried away by liquid flow across the wall, and in which the liquid is introduced into the separator so as to flow uniformly across the separator wall, thereby to improve the consistency and efficiency of separation.

The liquid may be introduced under pressure through the separator wall, by providing that the wall is at least in part porous.

From a still further aspect the invention consists in an instrument for separating, collecting and analysing gas or vapour borne materials, such instrument comprising a wetted wall cyclone separator in accordance with the present invention.

Other aspects of the invention will be apparent from the following description of a cyclone separator in accordance with the invention, and an instrument incorporating such a cyclone separator, which are described with reference to the accompanying informal drawings of which:
Figure 1 illustrates a cyclone separator in accordance with the invention; and
Figure 2 illustrates, diagrammatically, an instrument for collecting, separating and analysing air borne materials, the instrument comprising a cyclone separator such as shown in Figure 1.

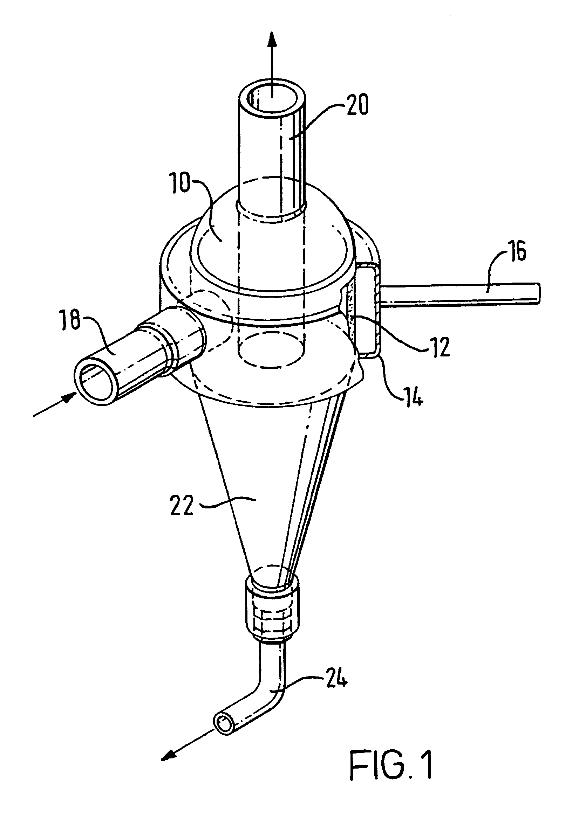

Referring to Figure 1, a wetted-wall cyclone separator in accordance with the invention comprises a cylindrical separator chamber 10, provided with a side wall 12, of porous material, itself surrounded by a sealed chamber 14, forming a water jacket about wall 12. The sealed chamber 14 is provided with a pipe 16 for the introduction into sealed chamber 14 of water under pressure.

Air inlet 18 is provided for the introduction of sampled air, for example ambient atmospheric air, to the cylindrical separator chamber 10, which is also provided with a central axial exhaust air outlet 20.

The lower part of cylindrical separator chamber 10 sits upon a tapered conical collection zone 22, terminated by a collector pipe 24 through which the wall washing water and any collected particulates are removed from the separator.

In use, sampled air, which may carry particulates of interest, is introduced, by means of differential pressure, into the cylindrical separator chamber 10, through air inlet pipe 18.

Water under pressure, introduced into water jacket 14, through water pipe 16, is forced through the porous wall 12 of the cylindrical separator chamber 10 to provide a continuous uniform film of water over the inner surface of porous wall 12 of chamber 10.

Particulates entrained in the air incoming through inlet 18 are centrifuged to the wall 12 of separator chamber 10, and are there entrapped in the continuous water film introduced under pressure through porous wall 12 and flowing across its inner surface, and flow with the water into collection zone 22 and out through collector pipe 24, for collection, and, if required, separation and analysis.

A suitable material for the porous wall 12 of separator chamber 10 is, for example, sintered stainless steel, although other suitably porous and inert materials such as ceramics may also be employed.

By surrounding the porous wall 12 with a sealed jacket 14, water introduced through inlet 16 under pressure is forced through the porous wall 12. If the pressure acting upon the water in the jacket 14 is maintained sensibly constant thoughout, and the porous wall 12 is of a controlled porosity, a continuous film of water will form on the inner surface of porous wall 12, entrapping and collecting centrifuged particles from the incoming air stream, wherever the particles may happen to fall upon the inner surface of the separator chamber wall 12.

Relative to the prior art inlet-spray cyclone separator, a cyclone wetted-wall separator in accordance with the present invention system offers improved sample collection efficiency due to the substantially uniform and continuous water film flowing across the inner face of the separator chamber wall 12.

A further advantage of a cyclone separator in accordance with the present invention is that the volume of liquid lost to the airstream through evaporation, and as water droplets, is greatly reduced relative to the losses incurred in an inlet-spray separator.

A still further advantage offered by a cyclone wetted-wall separator in accordance with the invention is that where operation is at temperatures that would be expected to to freeze the collecting liquid, less energy, relative to an inlet-spray separator, is needed to prevent the collecting liquid from freezing, as only the cyclone wall, the water jacket, or the water supply, need to be heated, rather than the whole assembly and incoming analyte-bearing air or other gas in the case of an inlet spray separator.

Such an energy saving is particularly valuable in the case of portable instruments operated from a portable source of electrical energy such as a storage battery.

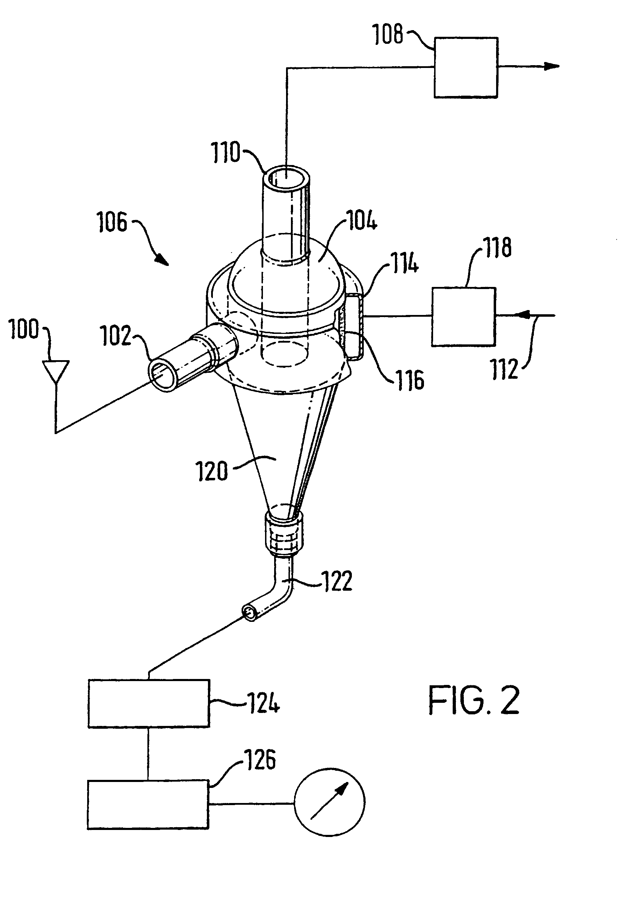

Figure 2 illustrates, diagramatically, an airborne particulate collection and analysis instrument incorporating a wetted-wall cyclone separator of the type described with reference to Figure 1.

Ambient air, together with any airborne analyte in the form of particulate material or vapour, is sampled by means of air sampler 100 and conveyed through air inlet 102 to the separator chamber 104 of wetted wall cyclone separator 106. Air flow into and through separator 106 is produced by air pump 108 attached to air outlet 110 of the cyclone separator chamber 104.

Water from line 112 is pumped into the sealed water chamber 114 surrounding the porous wall 116 of the separator chamber 104 by means of pump 118, and after passing through porous wall 116 produces a continuous uniform film over the inner surface of the porous wall 116.

Cyclonic action of incoming air is induced by the exhaust pump 108, and any airborne particulates or vapours are deposited upon the inner surface of porous wall 116 and entrained in the continuous water film flowing thereover.

The water and entrained analyte flow under the action of gravity to the adjoining collection zone 120 and through collector pipe 122 to sample treatment means 124 and sample detection means 126.

The nature of the sample treatment means 124 and the sample detection means 126, generally known in the art, will be determined by the nature of the analyte materials of interest.

Whilst specific examples of a separator and an instrument incorporating a separator in accordance with the invention have been described, it will be apparent that modifications may be made thereto without exceeding the scope of the invention.

For example whilst the invention has been described in terms of the collection of airborne particulate materials, airborne vapours may be similarly collected and entrained in the water film flowing across the surface of the porous wall of the separator and conveyed to appropriate sample treatment and analysis means.

Similarly although the wall coating and sample collecting liquid in the embodiments described is water, other liquids appropriate to the application may be employed. These may be aqueous solutions or any other liquid(s) compatible with the analyte, the analyte treatment means and any detector employed.

Under certain conditions, a cyclone separator in accordance with the invention may be provided with an inlet spray device, in which the incoming analyte-bearing air or gas stream has a liquid, such as water, sprayed into it.

## Claims

1. A cyclone separator, for the separation of material from a material-bearing gas or vapour, in which, in operation, the material-bearing gas is injected into a separating chamber (10), and the material is centrifuged to a separating chamber wall (12) and falls to the bottom of the separating chamber for collection, and in which the separating chamber wall is wetted by a liquid in order to assist in collection of the centrifuged material from the separating chamber wall **characterised in that** the separating chamber (10) is at least in part defined by a cylindrical and porous wall (12) through which, in operation, a liquid is passed to form a film on an inner surface thereof, whereby the film collects material from said gas or vapour when tangentially introduced into said chamber, the liquid and collected material falling to the bottom of the chamber.

2. A cyclone separator as claimed in claim 1 in which the porous part of the separating chamber wall (12) is a sintered material.

3. A cyclone separator as claimed in claim 2 in which the sintered material is a ceramic.

4. A cyclone separator as claimed in claim 2 in which the sintered material is a metal.

5. A cyclone separator as claimed in claim 4 in which the metal is stainless steel.

6. A cyclone separator in accordance with any preceding claim in which the liquid is water.

7. A cyclone separator in accordance with any preceding claim in which the liquid is an aqueous solution.

8. A cyclone separator as claimed in claim 1 in which the material to be separated from the material-bearing gas or vapour is particulate material, gas or vapour.

9. A cyclone separator in accordance with any preceding claim further provided with inlet spray means enabling a liquid to be sprayed into the incoming material-bearing gas or vapour prior to separation in the separating chamber.

10. A cyclone separator in accordance with claim 9 in which the liquid is water.

11. An instrument for separating, collecting and detecting and/or analysing gas or vapour-borne materials comprising a cyclone separator as claimed in any preceding claim.

12. A method of separating a gas or vapour-borne material by means of a cyclone separator in which at least part of the inner wall of the separating chamber of the cyclone separator is cylindrical and porous, the wall being wetted by means of liquid incoming through the porous part, the separated material being collected and carried away by the flow of the liquid over the inner wall of the chamber.

## Patentansprüche

1. Zyklonseparator für die Separation von Stoff aus einem stofftragenden Gas oder Dampf, bei dem im Betrieb das stofftragende Gas in eine Separationskammer (10) eingespritzt wird und der Stoff auf eine Separationskammerwand (12) zentrifugiert wird und zur Sammlung zum Boden der Separationskammer fällt, und bei dem die Separationskammerwand mit einer Flüssigkeit befeuchtet wird, um die Sammlung des zentrifugierten Stoffes von der Separationskammerwand zu unterstützen, **dadurch gekennzeichnet, dass** die Separationskammer (10) mindestens teilweise durch eine zylindrische und poröse Wand (12) abgegrenzt wird, durch die im Betrieb eine Flüssigkeit hindurchgehen gelassen wird, um einen Film auf deren Innenseite auszubilden, wodurch der Film Stoff aus dem tangential in die Kammer eingeleitetem Gas oder Dampf sammelt, wobei die Flüssigkeit und das gesammelte Material zum Boden der Kammer fallen.

2. Zyklonseparator wie in Anspruch 1 beansprucht, bei dem der poröse Teil der Separationskammerwand (12) ein Sintermaterial ist.

3. Zyklonseparator wie in Anspruch 2 beansprucht, bei dem das Sintermaterial eine Keramik ist.

4. Zyklonseparator wie in Anspruch 2 beansprucht, bei dem das Sintermaterial ein Metall ist.

5. Zyklonseparator wie in Anspruch 4 beansprucht, bei dem das Metall rostfreier Stahl ist.

6. Zyklonseparator nach einem vorhergehenden Anspruch, bei dem die Flüssigkeit Wasser ist.

7. Zyklonseparator nach einem vorhergehenden Anspruch, bei dem die Flüssigkeit eine wässrige Lösung ist.

8. Zyklonseparator wie in Anspruch 1 beansprucht, bei dem der von dem stofftragenden Gas oder Dampf zu separierende Stoff Partikel, Gas oder Dampf ist.

9. Zyklonseparator nach einem vorhergehenden Anspruch, der weiterhin mit einer Einlasssprüheinrichtung versehen ist, mit der vor der Separation in der Separationskammer eine Flüssigkeit in das ankommende stofftragende Gas oder den entsprechenden Dampf gesprüht werden kann.

10. Zyklonseparator nach Anspruch 9, bei dem die Flüssigkeit Wasser ist.

11. Instrument zum Separieren, Sammeln und Nachweisen und/oder Analysieren von gasoder dampfgetragenen Stoffen, das einen Zyklonseparator wie in einem vorhergehenden Anspruch beansprucht enthält.

12. Verfahren zum Separieren eines gas- oder dampfgetragenen Stoffes mittels eines Zyklonseparators, bei dem mindestens ein Teil der Innenwand der Separationskammer des Zyklonseparators zylindrisch und porös ist, wobei die Wand mittels einer durch den porösen Teil hindurch ankommenden Flüssigkeit befeuchtet wird, wobei der separierte Stoff durch die Strömung der Flüssigkeit über die Innenwand der Kammer gesammelt und davongetragen wird.

## Revendications

1. Séparateur à cyclone pour la séparation entre un matériau et un gaz ou une vapeur contenant un matériau, dans lequel, en service, le gaz contenant le matériau est injecté dans une chambre de séparation (10) et le matériau est centrifugé sur une paroi (12) de la chambre de séparation et tombe dans le fond de la chambre de séparation pour y être recueilli, et dans lequel la paroi de la chambre de séparation est mouillée par un liquide afin d'aider à recueillir le matériau centrifugé de la paroi de la chambre de séparation, **caractérisé en ce que** la chambre de séparation (10) est au moins en partie définie par une paroi cylindrique et poreuse (12) à travers laquelle, en service, un liquide est envoyé pour former un film sur sa surface interne, le film recueillant du matériau dudit gaz ou de ladite vapeur lorsqu'il ou elle est introduit(e) tangentiellement dans ladite chambre, le liquide et le matériau recueilli tombant dans le fond de la chambre.

2. Séparateur à cyclone selon la revendication 1, dans lequel la partie poreuse de la paroi (12) de la chambre de séparation est un matériau fritté.

3. Séparateur à cyclone selon la revendication 2, dans lequel le matériau fritté est une céramique.

4. Séparateur à cyclone selon la revendication 2, dans lequel le matériau fritté est un métal.

5. Séparateur à cyclone selon la revendication 4, dans lequel le métal est de l'acier inoxydable.

6. Séparateur à cyclone selon l'une quelconque des revendications précédentes, dans lequel le liquide est de l'eau.

7. Séparateur à cyclone selon l'une quelconque des revendications précédentes, dans lequel le liquide est une solution aqueuse.

8. Séparateur à cyclone selon la revendication 1, dans lequel le matériau à séparer du gaz ou de la vapeur contenant le matériau est un matériau particulaire, un gaz ou une vapeur.

9. Séparateur à cyclone selon l'une quelconque des revendications précédentes, pourvu en outre de moyens de pulvérisation d'entrée permettant la pulvérisation d'un liquide dans le gaz ou la vapeur d'entrée contenant le matériau avant la séparation dans la chambre de séparation.

10. Séparateur à cyclone selon la revendication 9, dans lequel le liquide est de l'eau.

11. Instrument pour la séparation, la collecte et la détection et/ou l'analyse de matériaux contenus dans un gaz ou une vapeur, comprenant un séparateur à cyclone selon l'une quelconque des revendications précédentes.

12. Procédé de séparation d'un matériau contenu dans un gaz ou une vapeur au moyen d'un séparateur à cyclone, dans lequel au moins une partie de la paroi interne de la chambre de séparation du séparateur à cyclone est cylindrique et poreuse, la paroi étant mouillée au moyen d'un liquide entrant à travers la partie poreuse, le matériau séparé étant recueilli et évacué par l'écoulement de liquide sur la paroi interne de la chambre.
